(19) **Europäisches Patentamt**
**European Patent Office**
**Office européen des brevets**

(11) Veröffentlichungsnummer: **0 205 824 B1**

(12) **EUROPÄISCHE PATENTSCHRIFT**

(45) Veröffentlichungstag der Patentschrift: **17.07.91**

(51) Int. Cl.⁵: **B60C 9/04**, B60C 9/20, B60C 9/00

(21) Anmeldenummer: **86105761.0**

(22) Anmeldetag: **25.04.86**

(54) **Fahrzeugluftreifen.**

(30) Priorität: **18.06.85 DE 8517681 U**

(43) Veröffentlichungstag der Anmeldung:
**30.12.86 Patentblatt 86/52**

(45) Bekanntmachung des Hinweises auf die
Patenterteilung:
**17.07.91 Patentblatt 91/29**

(84) Benannte Vertragsstaaten:
**AT BE CH DE FR GB IT LI LU NL SE**

(56) Entgegenhaltungen:
**CH-A- 518 191**
**DE-A- 2 717 078**
**GB-A- 2 013 739**

(73) Patentinhaber: **Continental Gummi-Werke Aktiengesellschaft**
**Königsworther Platz 1 Postfach 169**
**W-3000 Hannover 1(DE)**

(72) Erfinder: **Buschmann, Erich, Dipl.-Ing.**
**Lelbach B 17**
**W-3540 Korbach(DE)**
Erfinder: **Eltze, Dieter, Dipl.-Phys.**
**Am Herrengraben 11**
**W-3540 Korbach(DE)**
Erfinder: **Wrede, Martin**
**Dortmunder Strasse 14 a**
**W-3540 Korbach(DE)**

## Beschreibung

Die Neuerung bezieht sich auf einen Fahrzeugluftreifen mit einer Karkasse und/oder einem Gürtel aus einem gummierten Cordfäden aufweisenden Cordgewebe, vorzugsweise Textilgewebe, das aus randüberlappten Abschnitten zusammengesetzt ist. Ein derartiger Reifen ist z.B. aus der GB-A-2013 739 bekannt.

Derartige Zusammensetzungen sind erforderlich, weil es nicht gelingt, Cordgewebebahnen unter bestimmten Richtungen ihrer Cordfäden herzustellen, vielmehr weisen die gummierten Cordgewebebahnen alle längsverlaufende Festigkeitsträger auf, die nach ihrer Gummierung in Quer- oder Schrägbahnen aufgetrennt werden müssen, welche schließlich unter geringfügiger Überlappung zu längeren Bahnen zusammengefügt werden.

Diese Überlappungsstellen führen zu einer Häufung der Festigkeitsträger, die bei der Herstellung des Reifens, aber auch beim Betrieb des Reifens nachteilige Folgen, z.B. im Vergleich zu den anderen Bereichen Verstrammungen, Einschnürungen oder dergl. mit sich bringen können.

Der Neuerung liegt die Aufgabe zugrunde, durch eine besondere Ausbildung der für die Überlappungsstellen vorgesehenen Cordfäden die vorgenannten Nachteile zu beseitigen.

Zur Lösung dieser Aufgabe weisen aufgrund der Neuerung die im Überlappungsbereich befindlichen Cordfäden eine gegenüber den benachbarten Cordfäden höhere Drehung auf.

Diese größere, höhere Drehung hat eine entsprechend vergrößerte elastische Dehnung des Cordfadens zur Folge, so daß sich dementsprechende Dehnungen und Festigkeitswerte schlechthin erreichen lassen, die den Abschnitten des Gewebes entsprechen, welche neben den Überlappungsstellen liegen.

Weitere Einzelheiten der Erfindung werden anhand der Zeichnung erläutert, in der ein Ausführungsbeispiel der Erfindung dargestellt ist.

Es zeigen:

Fig. 1     eine Reifenseitenwand im Querschnitt, und zwar im Teilquerschnitt senkrecht zu den sie durchsetzenden Cordfäden des Cordgewebes und

Fig. 2     eine Teildraufsicht auf das vom Gummi befreite Cordgewebe in Richtung des Pfeiles a gesehen.

Die Reifenseitenwand 1 des Reifens besteht im wesentlichen aus Gummi. Sie ist jedoch durch zwei Cordgewebelagen 2, 3 verstärkt, wobei es sich versteht, daß die beiden Cordgewebelagen 2, 3 lediglich im Bereich der Wulstpartie des Reifens oder im unteren Bereich der Reifenseitenwand 1 angeordnet sind, während in den übrigen Abschnitten der Reifenseitenwand im Regelfalle nur eine Cordgewebelage vorgesehen ist. Die Cordgewebelagen 2 und 3 sind aus Abschnitten 4, 5 zusammengesetzt. Die Überlappungsstellen sind mit 6 bezeichnet. Sie haben eine solche Breite, daß jeweils drei Cordfäden 7 an der Überlappungsstelle 6 übereinanderliegen, während zu beiden Seiten der Überlappungsstelle 6 lediglich eine Einzellage vorgesehen ist.

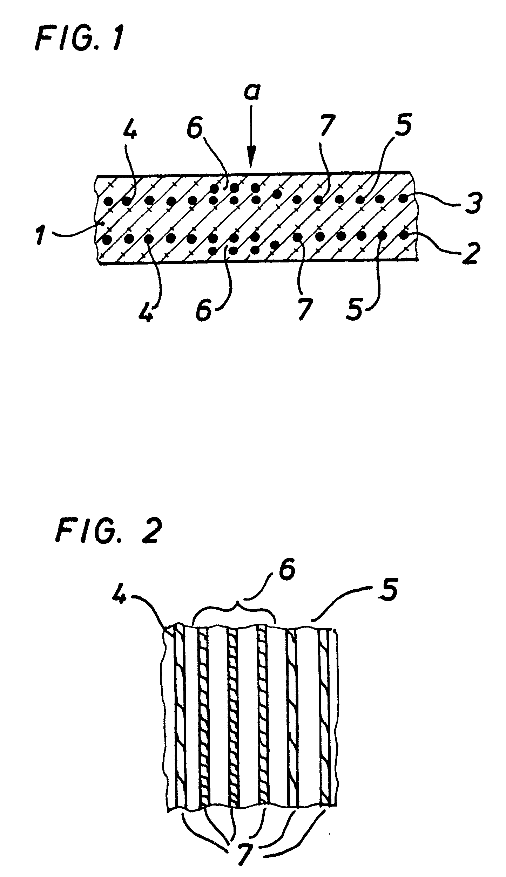

Wie aus Fig. 2 erkennbar ist, haben die Cordfäden 7 an der überlappungsstelle 6 eine vergleichsweise größere Drehung. Diese Drehung ist um etwa 10 bis 30 % größer als das Drehungsmaß für die Cordfäden 7, die zu beiden Seiten der überlappungsstelle 6 angeordnet sind. Damit werden Einschnürungen im Bereich der Überlappungsstelle 6 praktisch ausgeschlossen, so daß eine wesentlich höhere elastische Dehnung der Cordfäden im Überlappungsbereich - obwohl gedoppelt - eintreten kann.

## Patentansprüche

1.     Fahrzeugluftreifen mit einer Karkasse und/oder einem Gürtel aus gummiertem Cordfäden (7) aufweisenden Cordgewebe, vorzugsweise Textilgewebe, das aus randüberlappten Abschnitten zusammengesetzt ist, dadurch gekennzeichnet, daß die im Überlappungsbereich (6) befindlichen Cordfäden (7) eine gegenüber den benachbarten, nicht in der Überlappungsstelle liegenden Cordfäden wesentlich größere Drehung aufweisen.

2.     Fahrzeugluftreifen nach Anspruch 1, dadurch gekennzeichnet, daß das Drehungsmaß um 10 bis 30 % größer ist.

3.     Fahrzeugluftreifen nach Anspruch 2, dadurch gekennzeichnet, daß das Drehungsmaß um etwa 20 % größer ist.

4.     Fahrzeugluftreifen nach Anspruch 1, dadurch gekennzeichnet, daß die Überlappungsbreite praktisch dem Breitenbereich entspricht, den zwei bis vier Cordfäden (7) bestimmen.

5.     Fahrzeugluftreifen nach Anspruch 4, dadurch gekennzeichnet, daß die Überlappungsbreite praktisch dem Breitenbereich entspricht, den zwei Cordfäden (7) bestimmen.

## Claims

1.     Pneumatic vehicle tyre, having a carcase and/or a belt formed from a rubber-coated cord fabric, which comprises cord filaments (7), preferably a textile fabric, which is composed of portions which are overlapped at the edges, characterised in that the cord filaments (7), which are situated in the overlap region (6), are substantially more twisted than the adjacent cord filaments which are not situated in the overlap region.

2. Pneumatic vehicle tyre according to claim 1, characterised in that the extent of twisting is 10 to 30 % greater.

3. Pneumatic vehicle tyre according to claim 2, characterised in that the extent of twisting is substantially 20 % greater.

4. Pneumatic vehicle tyre according to claim 1, characterised in that the width of overlap practically corresponds to the width dimension determined by two to four cord filaments (7).

5. Pneumatic vehicle tyre according to claim 4, characterised in that the width of overlap practically corresponds to the width dimension determined by two cord filaments (7).

**Revendications**

1. Pneumatique pour véhicules avec une carcasse et/ou une ceinture en tissu de corde caoutchouté présentant des fils de corde (7), tissu textile de préférence, qui est constitué de parties en chevauchement sur leurs bords, caractérisé en ce que les fils de corde (7) qui se trouvent dans la région de chevauchement (6) présentent une torsion nettement supérieure à celle des fils de corde voisins, qui ne se trouvent pas dans la région de chevauchement.

2. Pneumatique pour véhicules selon la revendication 1, caractérisé en ce que la valeur de torsion est supérieure de 10 à 30%.

3. Pneumatique pour véhicules selon la revendication 2, caractérisé en ce que la valeur de torsion est supérieure d'environ 20%.

4. Pneumatique pour véhicules selon la revendication 1, caractérisé en ce que la largeur de chevauchement correspond pratiquement à la zone de largeur que déterminent deux à quatre fils de corde (7).

5. Pneumatique pour véhicules selon la revendication 4, caractérisé en ce que la largeur de chevauchement correspond pratiquement à la zone de largeur que déterminent deux fils de corde (7).

*FIG. 1*

*FIG. 2*